# EUROPÄISCHE PATENTANMELDUNG

(11) **EP 3 991 954 A2**
(43) Veröffentlichungstag der Anmeldung: **04.05.2022**
(21) Anmeldenummer: 21195089.4
(22) Anmeldetag: 06.09.2021
(51) Int. Cl.: B29C 70/46, B29C 33/00, B29C 70/54, B29C 70/86, B29L 31/44

(54) **VERFAHREN ZUR HERSTELLUNG EINER EINSTÜCKIGEN FASERVERBUNDSTRUKTUR AUS ZUMINDEST EINER FASERVERBUNDMATTE SOWIE FASERVERBUNDSTRUKTUR**

(30) Priorität: 28.10.2020 DE 102020213543
(71) Anmelder: Sedus Stoll AG, 79804 Dogern (DE)
(72) Erfinder: KONSTANTIN, Thomas, 79725 Laufenburg (DE); DÄSCHLE, Kurt, 88696 Owingen (DE); KAMMERL, Manuel, 79771 Rechberg (DE); STENZEL, Thomas, 79809 Weilheim (DE); MAIER, Klaus, 79875 Dachsberg (DE)
(74) Vertreter: Isarpatent

(57) **Zusammenfassung**

Die vorliegende Erfindung betrifft ein Verfahren zur Herstellung einer einstückigen Faserverbundstruktur (1) aus zumindest einer Faserverbundmatte (2), umfassend Erhitzen der zumindest einen Faserverbundmatte (2) auf eine Umformtemperatur und Pressen der erhitzten zumindest einen Faserverbundmatte (2) in einem einzelnen Arbeitshub eines Formwerkzeugs (4) zu einem flächigen Formteil, welches entsprechend einer Gestalt der Faserverbundstruktur (1) geformt ist, wobei das Formteil in dem Arbeitshub aus der zumindest einen Faserverbundmatte (2) konturgestanzt und in Form gepresst wird und wobei die zumindest eine Faserverbundmatte (2) als ein einstückiges flexibles textiles Flächengebilde mit einem Kunststoffbestandteil ausgebildet ist, welcher eine Schmelztemperatur unterhalb der Umformtemperatur aufweist.

## Beschreibung

### GEBIET DER ERFINDUNG

Die vorliegende Erfindung betrifft ein Verfahren zur Herstellung einer einstückigen Faserverbundstruktur aus zumindest einer Faserverbundmatte. Die vorliegende Erfindung betrifft insbesondere ein Verfahren zur Herstellung einer einstückigen Möbelstrukturkomponente. Weiterhin betrifft die Erfindung eine Faserverbundstruktur, welche mit einem derartigen Verfahren hergestellt ist.

### TECHNISCHER HINTERGRUND

In der Möbelbranche steigt in jüngerer Zeit die Nachfrage nach Produkten auf der Basis von Vlies, Filz und anderen Fasermaterialien. Allgemein kommen vermehrt Faserverbundwerkstoffe mit natürlichen und/oder synthetischen Fasern und geeigneten Bindemitteln zum Einsatz. Vielfach dient hierbei ein Kunststoff als Grundmaterial für die Fasern und/oder das Bindemittel, welcher unter Wärmeeinwirkung fließfähig wird und den Faserverbund damit unter Druck und Temperatur formbar macht. Typische Materialien umfassen insbesondere Polyester wie Polyethylenterephthalat (PET) oder Polylactid (PLA) oder dergleichen.

So beschreibt beispielsweise die Druckschrift DE 30 07 343 A1 ein Verfahren zur Herstellung von Formteilen aus Faservlies, bei welchem Fasern verwendet werden, die zumindest mantelseitig bindungswirksam schmelzbaren Werkstoff aufweisen. Vlies-Teilstücke werden unter Temperatureinwirkung formgepresst. Die Wärmebehandlung führt hierbei dabei dazu, dass Bindungsprozess und Formungsprozess gleichzeitig ablaufen.

Die Druckschrift EP 3 241 462 B1 beschreibt ein Möbel- und/oder Raumteilerstrukturelement mit zumindest einem raumseitigen Flächenelement, welches ganz oder teilweise als überwiegend glattflächiges Formvlies aus Kunststoff ausgebildet ist.

### ZUSAMMENFASSUNG DER ERFINDUNG

Vor diesem Hintergrund liegt der vorliegenden Erfindung die Aufgabe zugrunde, Faserverbundstrukturen mit flexibler Flächengestaltung in möglichst einfacher Weise herzustellen.

Erfindungsgemäß wird diese Aufgabe durch ein Verfahren mit den Merkmalen des Patentanspruchs 1 und durch eine Faserverbundstruktur mit den Merkmalen des Patentanspruchs 18 gelöst.

Demgemäß ist vorgesehen:
- Ein Verfahren zur Herstellung einer einstückigen Faserverbundstruktur aus zumindest einer Faserverbundmatte, umfassend Erhitzen der zumindest einen Faserverbundmatte auf eine Umformtemperatur und Pressen der erhitzten zumindest einen Faserverbundmatte in einem einzelnen Arbeitshub eines Formwerkzeugs zu einem flächigen Formteil, welches entsprechend einer Gestalt der Faserverbundstruktur geformt ist, wobei das Formteil in dem Arbeitshub aus der zumindest einen Faserverbundmatte konturgestanzt und in Form gepresst wird und wobei die zumindest eine Faserverbundmatte als ein einstückiges flexibles textiles Flächengebilde mit einem Kunststoffbestandteil ausgebildet ist, welcher eine Schmelztemperatur unterhalb der Umformtemperatur aufweist.
- Eine Faserverbundstruktur, welche mit einem erfindungsgemäßen Verfahren hergestellt ist.

Eine der vorliegenden Erfindung zugrundeliegende Idee besteht darin, eine selbsttragende flächige Faserverbundstruktur vollständig aus zumindest einer Fasermatte zu fertigen, indem ein Formteil in einem einzelnen Arbeitshub eines Formwerkzeugs, d.h. in nur einem Fertigungsschritt, vollständig geformt wird. Hierbei wird ein Konturschnitt für das Formteil aus der zumindest einen Faserverbundmatte ausgestanzt und gleichzeitig in Form gepresst. Dabei werden unter anderem auch Rundungen und Kanten in demselben Verfahrensschritt mit ausgebildet.

Als materielle Grundlage für das Formteil dient hierbei zumindest eine einteilige Fasermatte mit einem Kunststoffanteil, der mittels Wärmebehandlung in einen verformbaren und/oder fließfähigen Zustand gebracht wird. Vor dem eigentlichen Pressvorgang kann die zumindest eine Faserverbundmatte geeignet zugeschnitten werden. Die Erwärmung des Materials kann dann sowohl vor dem eigentlichem Pressvorgang, z.B. durch einen Heißluftstrom in einem Ofen, als auch währenddessen stattfinden, z.B. durch Aufheizung des Formwerkzeugs. Durch das Zusammenspiel des erhitzten Kunststoffanteils und der Druckbeaufschlagung des Pressvorgangs wird ein Vernetzungs-, Verformungs- und/oder Verdichtungsprozess innerhalb der Faserverbundstruktur in Gang gesetzt, bei welchem sich das aufgeschmolzene Kunststoffmaterial zwischen den Fasern verteilt und diese dabei miteinander verklebt. Nach Abkühlung und dadurch bedingter Aushärtung des Kunststoffs bleibt ein ausgehärtetes Faserverbundformteil in der gewünschten Form zurück.

Durch entsprechende Formgestaltung des Formwerkzeugs lassen sich praktisch beliebig geformte Bauteile in einfacher Weise und mit hoher Durchsatzrate herstellen. Überschüssiges Material kann in Nachbearbeitungsschritten entfernt bzw. abgetrennt werden, z.B. mit einer Wasserschneidanlage. Dabei können Kanten, falls gewünscht bzw. erforderlich, sauber entgratet und gebürstet werden, um eine gewünschte Vlieshaptik zu erhalten.

Ein nachträgliches Ausschneiden aus dem Faserverbundmaterial entlang der Kontur kann dabei entfallen, d.h. das Formteil kann in dem einen Arbeitshub gepresst, geformt, konturgestanzt und konturgeschnitten werden. Dies kann beispielsweise durch einen oder mehrere umlaufende Konturstege bzw. Quetschkanten in dem Formwerkzeug erreicht werden, die das Material so weit verdichten, dass es während des Pressvorgangs entlang der Kontur abreißt bzw. abgetrennt wird. Dadurch kann sich eine Nachbearbeitung beispielsweise auf eine Entfernung eines Grates beschränken. Prinzipiell kann die Kontur jedoch alternativ ebenso zunächst lediglich in das Fasermaterial eingestanzt werden, ohne dass dieses vollständig entlang der Kontur abgetrennt wird. Das Formteil kann in diesem Fall im Anschluss an den Pressvorgang aus der Kontur ausgeschnitten werden.

Insbesondere kann das erfindungsgemäße Verfahren verwendet werden, um eine Möbelstrukturkomponente für ein Möbelstück in möglichst effizienter, materialsparender und leichtgewichtiger Weise zu fertigen. Unter einer Möbelstrukturkomponente wird vorliegend ein flächiger Hauptbestandteil eines Möbelstücks verstanden, welcher wenigstens ein raumseitiges Flächenelement aufweist bzw. als solches ausgebildet ist. Hierbei kann es sich beispielsweise um Außenwände von Schränken, um Tischplatten, um Raumteilerelemente wie Tischtrennwände oder dergleichen, um Sitzflächen und/oder Rückenlehnen von Sitzmöbeln oder dergleichen handeln.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung können zwei Faserverbundmatten miteinander verpresst werden.

Es werden somit zwei flexible textile Flächengebilde mit einem entsprechenden Kunststoffbestandteil miteinander verpresst. Aufgrund der vorherigen Wärmebehandlung wird das Material der beiden Faserverbundmatten während des Pressvorgangs dauerhaft miteinander in stoffschlüssiger Weise verbunden. Prinzipiell ist darüber hinaus natürlich ebenso möglich drei, vier oder mehr Faserverbundmatten miteinander zu verpressen.

Gemäß einer Weiterbildung können die beiden Faserverbundmatten vor dem Verpressen miteinander vernadelt werden.

Speziell Vlies- und Filzstoffe können damit schnell und dennoch präzise aneinander fixiert werden, um die relative Anordnung und Ausrichtung der beiden Faserverbundmatten mit einer gewissen Genauigkeit für den anschließenden Pressvorgang sicherzustellen. Vernadeln bedeutet hierbei, dass ein Teil der Fasern der beiden Matten durch Nadelwalzen so ineinandergeschoben wird, dass diese ineinander verhaken und so einen Verbund der beiden Matten bilden. Derartige Nadelvliese bieten eine außerordentlich hohe Strapazierfähigkeit.

Es versteht sich, dass die beiden Faserverbundmatten grundsätzlich auch anderweitig aneinander befestigt werden können, wenn es für die jeweiligen Umstände vorteilhaft ist. Grundsätzlich kann eine Befestigung der beiden Faserverbundmatten aneinander in bestimmten Anwendungen jedoch ebenso komplett wegfallen. Prinzipiell kann eine relative Anordnung der beiden Faserverbundmatten auch durch das Formwerkzeug vorgegeben werden.

Gemäß einer Weiterbildung kann ein Hohlraum zwischen den beiden Faserverbundmatten ausgeformt werden, indem ein Formkern zwischen die beiden Faserverbundmatten eingelegt wird und nach dem Verpressen wieder herausgezogen wird.

In dieser Weiterbildung wird somit eine Faserverbundstruktur aus zwei Fasermatten gefertigt und dabei gleichzeitig ein Hohlraum direkt mit eingeformt. Dieser Hohlraum kann beispielsweise funktionale Zwecke erfülle, z.B. als Montageöffnung für ein Montageelement dienen, welches in dem Hohlraum befestigt und zur Montage der Faserverbundstruktur an einer weiteren Komponente genutzt werden kann.

Es versteht sich, dass entsprechend mehrere Hohlräume ausgebildet werden können, in die dann jeweils beispielsweise ein Montageelement einsetzbar ist.

Gemäß einer Weiterbildung kann ein Dorn als Formkern zur Formung eines zylinderförmigen Hohlraums verwendet werden.

Beispielsweise kann ein Metallstab in das Formwerkzeug eingespannt werden, der dann vor oder während des Pressvorgangs zwischen die beiden Faserermatten eingeführt wird und nach Aushärtung des Formteils wieder herausgezogen wird. Die beiden Faserverbundmatten werden bei dem Umformprozess gegen den Metallstab gepresst, wodurch ein zylinderförmiger Hohlraum gebildet wird. Ein Stabelement, z.B. ein hohles Rohr, kann anschließend in den Hohlraum eingelegt und/oder eingepresst werden und als Verbindungsstück für weitere Komponenten dienen.

Die Verbindung zwischen dem Stabelement und dem Formteil bzw. allgemein zwischen dem Montageelement und dem Formteil kann hierbei (wiederholt) lösbar oder unlösbar gestaltet sein. Beispielsweise kann das Montageelement (also insbesondere das Stabelement) in den Hohlraum eingeklebt sein. Ebenso kann ein Kraftschluss und/oder ein Formschluss zwischen dem Montageelement und dem Formteil das Montageelement gegen Herausziehen aus dem Hohlraum sichern.

Gemäß einer Weiterbildung kann die zumindest eine Faserverbundmatte einen Vliesstoff und/oder einen Filzstoff aufweisen.

Ein Vliesstoff ist ein Gebilde aus Fasern beliebiger Länge, die auf irgendeine Weise zu einer Faserschicht zusammengefügt und miteinander verbunden worden sind. Als flexible textile Flächengebilde sind Vliesstoffe leicht biegsam und weisen eine vergleichsweise geringe Dicke gegenüber ihrer Länge und Breite auf. Ihre Hauptstrukturelemente sind hierbei Fasern, die aus unterschiedlichsten Materialien bestehen können. Vliesstoffe stellen eine Materialgruppe mit einer großen Eigenschaftsvielfalt dar, die durch die Vielzahl von nutzbaren Rohstoffen und Herstellungsvarianten einem breiten Spektrum von Anwendungsanforderungen gezielt angepasst werden kann.

Ein Filzstoff ist ursprünglich ein Faserwerkstoff aus einem Naturprodukt, insbesondere Schurwolle von Schafen. Allerdings ist es ebenso möglich, Filze aus Chemiefasern (Kunststoff) und Pflanzenfasern (z.B. Kokos oder Baumwolle) herzustellen. Filzstoffe werden mitunter basierend auf den verwendeten Fasermaterialien von Vliesstoffen abgegrenzt. Eine weitere häufige Unterscheidung wird darin getroffen, dass Filze nicht nur eine oberflächliche, sondern auch im Inneren eine weitgehende und gleichmäßige Verfestigung des Fasermaterials aufweisen. Eine Unterscheidung kann somit prinzipiell anhand der Dichte und/oder des Verfestigungsmechanismus vorgenommen werden. Jüngere Normen für die Definition von Vliesstoffen sehen jedoch keine explizite Trennung mehr zu den Filzen vor.

Gemäß einer Weiterbildung kann die zumindest eine Faserverbundmatte PET-basierte Fasern umfassen.

Polyethylenterephthalat (PET) ist ein durch Polykondensation hergestellter thermoplastischer Kunststoff aus der Familie der Polyester, d.h. ein glasklarer Kunststoff, der durch Schmelzen unter Luftabschluss zu Synthesefasern versponnen werden kann (Schmelzspinnverfahren). Da Polyester zu 100% recycelbar ist, besteht die Möglichkeit Vlieskomponenten aus recyceltem Material herzustellen und diese nach ihrem Lebenszyklus auch wieder dem Recyclingkreislauf zuzuführen.

Gemäß einer Weiterbildung kann die zumindest eine Faserverbundmatte Bikompomonentenfasern umfassen. Die Bikompomonentenfasern können einen Polyesterkern aufweisen, der von einem Polymermantel mit einer Schmelztemperatur unterhalb der Umformtemperatur umgeben ist.

Im Gegensatz zu einer reinen PET-Faser weist eine Bikompomonentenfaser somit lediglich einen Kern aus Polyester auf. PET weist dabei beispielsweise einen Schmelzpunkt zwischen etwa 200°C bis 300°C auf. Der den Kern umschließende Fasermantel kann nun ein Polymer mit einer deutlich niedrigeren Schmelztemperatur aufweisen, z.B. ein niedrig schmelzendes Polymer, welches bereits unter 150°C schmilzt, z.B. 130°C oder weniger. Bei einer entsprechenden Wärmebehandlung einer Faserverbundmatte aus solchen Fasern kann somit lediglich der Mantel der Fasern aufgeschmolzen werden und als Vernetzungsbasis für die Bildung des Formteils dienen. Die Faserkerne können dagegen zumindest weitestgehend ihre feste Struktur behalten und als versteifendes Grundmaterial für das Formteil dienen.

Der Druck, welcher beim Pressen eingesetzt wird, entscheidet über die Dicke und Verdichtung des Formteils. Dabei verschmilzt bzw. verschweißt der niedrigschmelzende Anteil der Bikomponentenfasern mit dem Polyesteranteil der Fasern. Je stärker die Vernetzung der Fasern, desto geringer ist die Vlieshaptik der entstehenden Oberfläche. Gleichzeitig weist diese jedoch eine höhere Stabilität auf. Dabei hängt der Grad der Vernetzung ebenso von dem konkreten Pressvorgang ab. Bei größerer Verdichtung wird eine stärkere Vernetzung erzielt, da sich das aufgeschmolzene Material stärker verteilt.

Es versteht sich hierbei, dass eine verwendete Faserverbundmatte unterschiedliche Fasertypen aufweisen kann, z.B. einen ersten Fasertyp aus einer reinen PET-Faser und einen zweiten Fasertyp aus einem niedrigschmelzen Kunststoff bzw. mit einem Anteil aus einem derartigen Material. Weiterhin kann eine solche Faserverbundmatte einen Kunststoffanteil aufweisen, der nicht in Faserform vorliegt, sondern die Fasern der Matte beispielsweise als Bindematerial bzw. Matrixmaterial umgibt bzw. durchsetzt. Dieser bindende Kunststoffanteil kann beispielsweise in einem vorhergehenden Fertigungsschritt bereits aufgeschmolzen und mit den Fasern der Matte vernetzt worden sein.

Gemäß einer Weiterbildung kann das Formwerkzeug eine Matrize und eine Patrize umfassen, welche jeweils eine komplementäre Wirkoberfläche aufweisen, die im Zusammenspiel bei dem Pressen die Kontur und die Form des Formteils vorgeben.

Beispielsweise kann eine Presse als Formwerkzeug eine konvexe Matrize und eine dazu komplementäre konkave Patrize aufweisen, die im Zusammenspiel eine Negativform der gewünschten Endform bilden. Das Formteil wird von der Presse in dem einen Arbeitshub aus der zumindest einen Faserverbundmatte konturgestanzt und gleichzeitig in Form gepresst. Für die Konturzeichnung können die Matrize und die Patrize beispielsweise unterschiedliche stegartige Erhöhungen bzw. Wölbungen aufweisen. Mit derartigen Strukturen lassen sich zudem Vertiefungen, Falze und ähnliche funktionale Aspekte in der Struktur des Formteils erzeugen.

Gemäß einer Weiterbildung kann die zumindest eine Faserverbundmatte bei dem Pressen beidseitig weg von einer Flächenausdehnung der Faserverbundmatte gebogen werden.

Damit sind insbesondere unterschiedlich gekrümmte Bauteile aus einem Stück herstellbar. Beispielsweise kann ein Formvlies mit beidseitigen Radien inklusive Konturschnitt in einem Arbeitshub gefertigt werden. Dabei können ebenso Rundungen und/oder Kanten unter Verwendung desselben Verfahrensschrittes hergestellt bzw. bearbeitet werden.

Gemäß einer Weiterbildung kann ein Falz in die zumindest eine Faserverbundmatte eingepresst werden, welcher ein Filmscharnier zwischen zwei Bereichen des Formteils bildet.

Allgemein gesprochen können unterschiedliche Scharniere oder andere Gelenke durch entsprechende Bearbeitung der Faserverbundmatte(n) in das Formteil eingebracht werden. Beispielsweise kann eine Kerbe das Formteil in zwei über einen Falz miteinander verbundene Bereiche einteilen. Ausgehend von diesem Ansatz kann ein Formvlies bzw. Formfilz über eine Vielzahl von Scharnieren in ein umwandelbares Bauteil unterteilt werden, das beispielsweise aus einer Vielzahl von flächigen Platten zusammengesetzt ist. Das Bauteil kann in diesem Fall vergleichbar zu einem Faltschnitt an den Scharnieren auf- oder zugefaltet werden. In dem aufgebauten Zustand des Bauteils können sich die Platten gegenseitig abstützen, sodass beispielsweise ein geschlossenes Möbelstück durch Falten der Platten herstellbar sein kann, z.B. ein Hocker, ein Kasten, ein Schrank, ein Sitzmöbel usw.

Gemäß einer Weiterbildung kann während des Arbeitshubs ein Einlageteil mit der zumindest einen Faserverbundmatte verpresst werden.

Das Einlageteil kann beispielsweise als Versteifung und/oder als Montagestruktur für ein Möbelstrukturelement dienen. Beispielsweise kann ein Kunststoffbauteil in das verflüssigte oder zumindest weiche Plastikmaterial der Faserverbundmatte(n) eingepresst werden. Nach Abkühlung und Aushärtung kann eine stoffschlüssige Verbindung zwischen den Komponenten verbleiben. In einem konkreten Beispiel kann ein Kunststoffbauteil mit dem Vliesmaterial verpresst werden, um dieses bereichsweise zu verstärken. In einem anderen konkreten Beispiel kann ein Halter, eine Klammer, ein Verbindungsstück oder dergleichen fest mit dem Formteil verbunden werden.

Gemäß einer Weiterbildung kann das Einlageteil zwischen zwei Faserverbundmatten eingelegt und mit diesen verpresst werden.

Gemäß einer Weiterbildung kann während des Arbeitshubs in dem Formteil eine Versteifungsstruktur zur Versteifung der Faserverbundstruktur und/oder eine Montagestruktur zur Montage der Faserverbundstruktur ausgeformt werden.

Beispielsweise können durch geeignete Verdichtung und Verformung der Faserverbundmatte(n) ein oder mehrere versteifende Bereiche in dem Formteil erzeugt werden. In einem konkreten Beispiel kann eine regelmäßige Struktur aus Versteifungsrippen oder dergleichen in das Formteil eingearbeitet werden, bei der Bereiche mit höherer Dichte des Fasermaterials auf Bereiche mit niedrigerer Dichte in regelmäßigen Abständen folgen. In einem anderen konkreten Beispiel können alleinstehende Strukturen mit höherer Dichte in besonders beanspruchte oder belastete Bereiche der Faserverbundstruktur eingearbeitet werden.

Entsprechend können bestimmte Bereiche des Formteils geeignet geformt und verstärkt bzw. verdichtet werden, um beispielsweise Anbindungsbereiche für die Montage von Komponenten an der Strukturkomponente und/oder für die Befestigung der Strukturkomponente bereitzustellen, z.B. um eine Möbelstrukturkomponente an einem Möbelstück zu befestigen.

Gemäß einer Weiterbildung kann das Verfahren weiterhin Befestigen eines Montageelements an das Formteil zur Montage der Faserverbundstruktur umfassen.

Gemäß einer Weiterbildung kann das Montageelement insbesondere an das Formteil gefügt werden.

Alternativ oder zusätzlich zu einer Montagestruktur, welche in das Faserverbundmaterial als solches eingearbeitet ist, können ein oder mehrere Montageelemente an dem Formteil befestigt und/oder an dieses angeformt bzw. angefügt werden. Derartige Montageelemente umfassen beispielsweise Halter, Klammern, Tragelemente, Verbindungselemente, z.B. Winkelelemente, usw. Beispielsweise können derartige Einzelteile lösbar oder unlösbar mit dem Formteil verbunden werden. Besonders geeignete Fügeverfahren für Fasermaterialen bzw. Vliesstoffe umfassen hierbei Kleben und Schweißen, welche beide zu den stoffschlüssigen Fügeverfahren gehören. Als Schweißtechnik kommt neben dem klassischen thermischen Verschweißen, also der direkten Einwirkung mit Druck und Temperatur, insbesondere das Ultraschallschweißen in Betracht. Bei derartigen Schweißverfahren kann das Kunststoffmaterial oder zumindest ein Kunststoffbestandteil des Formteils aufgeschmolzen werden und mit einem entsprechenden Bestandteil des Montageelements stoffschlüssig verbunden werden.

In einer vorteilhaften Variante kann das Montageelement aus dem gleichen Material wie die zumindest eine Faserverbundmatte gefertigt sein. In diesem Beispiel kann die Möbelstrukturkomponente prinzipiell in ihrer Gesamtheit einschließlich der Montage- bzw. Verbindungselemente aus demselben Vliesstoff bzw. Filzstoff gebildet werden.

Prinzipiell kann aufgrund des verwendeten Vlies- bzw. Filzstoffes ein separates Element auch beispielsweise über einen Klettmechanismus an der Faserverbundstruktur befestigt werden. Beispielsweise kann ein flächiges Element bereichsweise mit einem selbsthaftenden Mikroklett oder dergleichen versehen werden. Für die Montage kann das Element nun einfach auf einen dafür vorgesehenen Bereich der Faserverbundstruktur gedrückt werden, um dort haften zu bleiben. Derart lassen sich beispielsweise Raumteiler in besonders praktischer Weise um einzelne flächige Elemente ergänzen. Ebenso können Ablageflächen oder dergleichen in flexibler Weise an einem Möbelstück (vorübergehend) befestigt werden.

Insbesondere kann das Montageelement in diesem Fall gemeinsam mit dem Formteil in dem Arbeitshub des Formwerkzeugs aus der oder den Faserverbundmatten gestanzt und in Form gepresst werden. In dieser besonders einfachen und zeiteffizienten Weiterbildung des Verfahrens dient somit zumindest eine Faserverbundmatte als Ausgangsmaterial für die Möbelstrukturkomponente samt Montageelementen. Hierbei können die einzelnen Komponenten aus unterschiedlichen Bereichen der Faserverbundmatte(n) konturgestanzt werden. Prinzipiell ist es hierzu ausreichend, wenn das Formwerkzeug einen Konturschnitt für die Komponenten in die Faserverbundmatte(n) einstanzt. Anschließend können die Komponenten in einem separaten Verfahrensschritt aus der zumindest einen Faserverbundmatte entlang der vorgezeichneten Konturen ausgeschnitten werden. Nichtsdestotrotz können die Komponenten jedoch bereits während des Pressvorgangs ihre finale Form bzw. Gestalt erhalten. Prinzipiell ist es jedoch ebenso möglich, die Montageelemente und/oder das Formteil nachträglich ergänzend zu bearbeiten, bevor diese aneinandergefügt werden.

Gemäß einer Weiterbildung kann das Montageelement in einem Hohlraum zwischen zwei miteinander verpressten Faserverbundmatten befestigt werden.

Beispielsweise kann ein stabförmiges Element in einen zylinderförmigen Hohlraum eingepresst oder anderweitig befestigt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Draufsicht auf eine Faserverbundmatte, welche in einem Verfahren zur Herstellung einer Faserverbundstruktur gemäß einer Ausführungsform der Erfindung verwendet wird;
- Fig. 2: eine schematische Schnittansicht eines Formwerkzeugs, welches in dem Verfahren verwendet werden kann;
- Fig. 3: ein schematisches Ablaufdiagramm des Verfahrens zur Herstellung einer Faserverbundstruktur gemäß einer Ausführungsform der Erfindung;
- Fig. 4: eine schematische Perspektivansicht einer Faserverbundstruktur von schräg hinten, welche mit dem Verfahren aus Fig. 3 hergestellt ist;
- Fig. 5: eine schematische Schnittansicht einer weiteren Faserverbundstruktur, welche mit dem Verfahren aus Fig. 3 hergestellt ist;
- Fig. 6: eine schematische Schnittansicht eines weiteren Formwerkzeugs, welches in dem Verfahren verwendet werden kann; und
- Fig. 7: eine schematische Perspektivansicht einer Faserverbundstruktur gemäß einer weiteren Ausführungsform der Erfindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

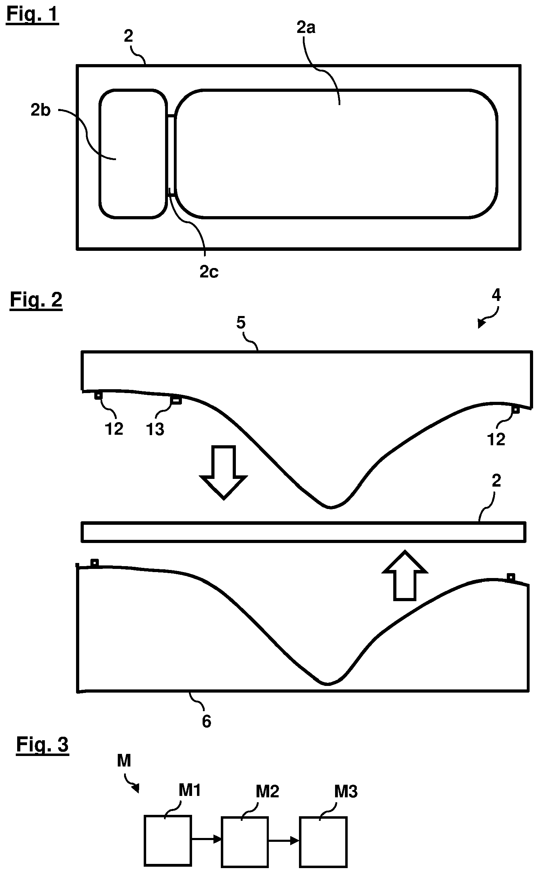

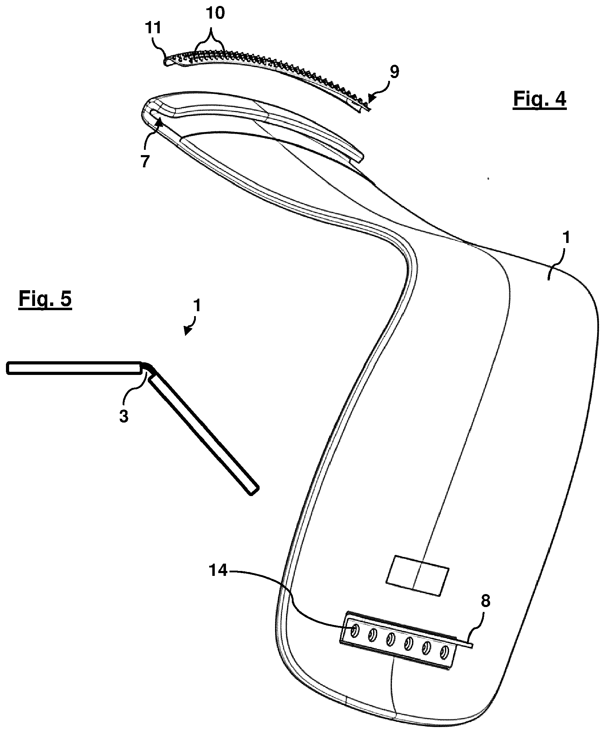

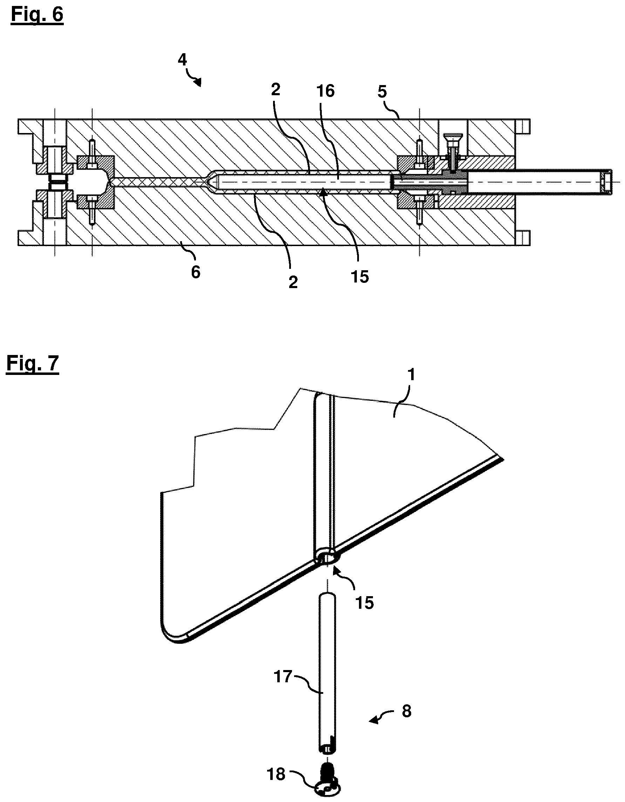

Figur 1 zeigt eine schematische Draufsicht auf eine Faserverbundmatte 2 aus Vliesstoff, welche in einem Verfahren M zur Herstellung einer Faserverbundstruktur 1 gemäß einer Ausführungsform der Erfindung verwendet wird. Die Faserverbundstruktur 1 wird hierbei einstückig aus einer oder mehreren solcher Faserverbundmatten 2 in einem einzelnen Fertigungsschritt in Form gepresst. Beispielhafte Faserverbundstrukturen 1, die aus einer einzelnen Faserverbundmatte 2 gefertigt sind, sind in Fig. 4 und 5 zu sehen. Das zugehörige Verfahren M für die Fertigung der Faserverbundstruktur 1 aus Vliesstoff ist schematisch als Ablaufdiagramm in Fig. 3 dargestellt. Fig. 2 zeigt ein Formwerkzeug 4, wie es für das Verfahren M eingesetzt werden kann. Ein hierzu alternatives Formwerkzeug 4 wird in Fig. 6 gezeigt. Bei diesem werden zwei Faserverbundmatten 2 miteinander verpresst. Eine entsprechend hergestellte Faserverbundstruktur 1 aus zwei Matten 2 ist in Fig. 7 zu sehen.

Das Verfahren M umfasst dabei unter M1 Erhitzen zumindest einer Faserverbundmatte 2 auf eine Umformtemperatur und unter M2 Pressen der erhitzten zumindest einen Faserverbundmatte 2 in einem einzelnen Arbeitshub des Formwerkzeugs 4 zu einem flächigen Formteil, welches entsprechend einer Gestalt der Faserverbundstruktur 1 geformt ist. Der Schritt des Erhitzens kann hierbei dem Pressvorgang vorgeschaltet durchgeführt werden, indem die zumindest eine Faserverbundmatte 2 beispielsweise in einen Schubladenofen eingelegt und auf oder über die Umformtemperatur aufgeheizt wird. Zuvor kann die zumindest eine Faserverbundmatte 2 bereits zugeschnitten worden sein.

Der Ofen kann beispielsweise auf eine Temperatur von 180°C gebracht werden, was bei einer Schmelztemperatur des Kunststoffs von 130° eine oder mehrere Minuten Zeit für den Press- und Umformprozess lässt, bevor die Schmelztemperatur wieder unterschritten wird und das Bauteil aushärtet und damit nicht weiter verformbar ist. Durch das Erhitzen kann das Vliesmaterial einen Volumenschrumpf von einigen Prozent erfahren, was in der Formgebung zu berücksichtigen ist. Der formgebende Vorgang in dem Formwerkzeug 4 kann dann mehrere Minuten dauern. Im Anschluss kann das Formteil entnommen werden. Alternativ oder zusätzlich ist es denkbar, das Formwerkzeug 4 zu erhitzen, um den Umformprozess zu unterstützten oder überhaupt erst zu ermöglichen.

Wie bereits weiter oben erwähnt wurde, handelt es sich bei den verwendeten Faserverbundmatten 2 um einstückige Faservliesmatten, d.h. um ein flexibles textiles Flächengebilde aus wirren und unregelmäßig verschlungenen, d.h. ungeordneten, Fasern. Hierbei kann es sich insbesondere um eine Filzmatte handeln. Als Fasern kommen in dieser konkreten Anwendung sowohl einfache Fasern aus PET, als auch Bikomponentenfasern zum Einsatz, die jeweils einen Polyesterkern aufweisen, der von einem Mantel aus einem niedrigschmelzenden Polymer umschlossen ist.

Es versteht sich hierbei, dass in anderen Ausführungen ebenso andere Fasertypen zum Einsatz kommen können. Dabei können Fasern mit unterschiedlichen Kunststoffzusammensetzungen ebenso eingesetzt werden wie Fasern aus tierischen (z.B. Wolle), pflanzlichen (z.B. Kokos, Hanf usw.) oder anderen Materialien (Glas, Kohlenstoff etc.). Dabei können die jeweils verwendeten Fasern in einen Kunststoff oder ein anderes Matrixmaterial eingebettet sein und/oder von diesem gebunden werden.

In dem vorliegenden Beispiel umfassen die Bikomponentenfasern mantelseitig einen Kunststoffbestandteil, welcher eine Schmelztemperatur unterhalb der Umformtemperatur aufweist, z.B. 130°C. Aufgrund der Wärmebehandlung wird dieser Kunststoffbestandteil aufgeweicht bzw. verflüssigt und dadurch fließfähig. Der Kern der Bikomponentenfasern und die einfachen PET-Fasern können bei geeigneter Wahl der Umformtemperatur jedoch in ihrem festen Zustand verbleiben. Aufgrund des Anpressdrucks in dem Formwerkzeug verteilt sich der geschmolzene Kunststoff in der Faserstruktur der zumindest einen Faserverbundmatte 2, was letztendlich zu einer mehr oder weniger starken Vernetzung innerhalb der zumindest einen Faserverbundmatte 2 führt. Hierbei verschmilzt der niedrigschmelzende Anteil der Bikomponentenfaser mit den einfachen PET-Fasern. Im Falle, dass mehrere solcher Fasermatten 2 miteinander verpresst werden, findet eine entsprechende Vernetzung auch an den Kontaktbereichen zwischen den beiden Matten 2 statt.

Für die Formgebung des Fasermaterials umfasst das Formwerkzeug 4 der Fig. 2 eine Presse, welche eine (konvexe) Matrize 5 und eine dazu komplementäre (konkave) Patrize 6 aufweist, die im Zusammenspiel eine Negativform der gewünschten Endform bilden (vgl. Fig. 2). Das Formteil wird von dem Formwerkzeug 4 in dem einen Arbeitshub aus der zumindest einen Faserverbundmatte 2 konturgestanzt und gleichzeitig in Form gepresst. Für die Konturzeichnung umfassen Matrize 5 und Patrize 6 unterschiedliche stegartige Erhöhungen bzw. Wölbungen. Mit derartigen Strukturen lassen sich zudem Vertiefungen, Falze und ähnliche funktionale Aspekte in der Struktur des Formteils erzeugen.

Beispielhaft hierfür sind in Fig. 2 mehrere Konturstege 12 eingezeichnet, die mehrere Stanzbereiche 2a, 2b in der zumindest einen Faserverbundmatte 2 vorgeben (vgl. Fig. 1). Aus dem ersten Stanzbereich 2a wird in dem gezeigten Beispiel bei dem Pressvorgang ein erster flächiger Bereich des Formteils geformt. Aus dem zweiten Stanzbereich 2b wird ein zweiter flächiger Bereich in der Faserstrukturkomponente 1 geformt. Die beiden Stanzbereiche 2a, 2b sind über einen Falzbereich 2c miteinander verbunden. In der Matrize 5 ist ein zugehöriger Falzsteg 13 ausgebildet, welcher während des Pressvorgangs einen Falz 3 in dem Falzbereich 2c ausbildet.

Fig. 5 zeigt ein solchermaßen gefertigtes Bauteil 1, bei welchem zwei plattenförmige Bereiche über einen Falz 3 miteinander gekoppelt sind. Es liegt somit ein einteilig mit den Bereichen verbundenes Scharnier vor, das durch seine Biegsamkeit eine Drehung der verbundenen Teile ermöglicht. Prinzipiell kann ein Bauteil 1 über eine Vielzahl derartiger Falze 3 unterteilt werden, sodass sich die einzelnen Bereiche des Bauteils 1 in unterschiedlichster Art und Weise zueinander ausrichten lassen können. Beispielsweise kann derart ein Raumteiler und/oder ein Screen oder dergleichen flexibel an die jeweiligen Gegebenheiten angepasst werden.

Sofern dies nicht bereits während des Pressvorgangs geschieht, können beide Stanzbereiche 2a, 2b direkt im Anschluss an den Pressvorgang mit einem geeigneten Verfahren ausgeschnitten werden, wobei überschüssiges Material der Faserverbundmatte 2 entfernt wird.

Während des Arbeitshubs kann in dem Formteil vorliegend zudem eine Versteifungsstruktur 7 zur Versteifung der Faserverbundstruktur 1 und/oder eine Montagestruktur 7 zur Montage der Faserverbundstruktur 1 ausgeformt werden. Weiterhin können während des Arbeitshubs ein oder mehrere Einlageteile 9 mit der Faserverbundmatte 2 verpresst werden, welche ebenfalls der Verstärkung und/oder der Montage dienen können.

In der beispielhaften Ausführung der Fig. 4 ist exemplarisch hierfür ein Umschlag als Struktur 7 randseitig in einer Möbelstrukturkomponente 1 ausgeformt. In diesem konkreten Beispiel handelt es sich dabei um eine Sitzschale für ein Sitzmöbel, z.B. einen Stuhl. Der Bereich der Sitzschale 1 mit dem Umschlag dient hierbei als Rückenlehne und kann beispielsweise an dem Umschlag auf eine Rückenstrebe eines Sitzgestells aufgesteckt sein (nicht abgebildet).

In dem Umschlag ist mit dem Formteil zudem zwecks Verstärkung ein Einlageteil 9 aus Kunststoff während des Arbeitshubs verpresst worden (vgl. Fig. 4 oben). Zur sicheren und dauerhaften Fügung an das Formteil weist das Einlageteil 9 eine Vielzahl von Befestigungshaken 10 an einer Befestigungsfläche 11 aufweist, an welcher das Einlageteil 9 mit der zumindest einen Faserverbundmatte 2 verpresst ist.

Wieder bezugnehmend auf Fig. 3 umfasst das Verfahren M unter M3 weiterhin Befestigen und/oder Fügen eines Montageelements 8 an das Formteil zur Montage der Faserstrukturkomponente 1.

Rein beispielhaft ist in Fig. 4 ein Montageelement 8 dargestellt, welches als Winkelelement ausgebildet ist. An einer Montagefläche ist das Montageelement 8 stoffschlüssig an das Formteil gefügt worden, z.B. mittels Ultraschallschweißen über eine Sonotrode. Beispielhaft sind in Fig. 4 mehrere Schweißpunkte 14 eingezeichnet.

Um den Fertigungsprozess besonders praktisch zu gestalten, wird das Montageelement 8 in dem Beispiel der Fig. 4 aus dem gleichen Material wie die zumindest eine Faserverbundmatte 2 gefertigt. Hierzu kann das Montageelement 8 gemeinsam mit dem Formteil in dem Arbeitshub des Formwerkzeugs 4 aus derselben Faserverbundmatte 2 gestanzt und in Form gepresst werden. Dazu kann ein weiterer Stanzbereich in der Faserverbundmatte 2 vorgesehen sein (nicht abgebildet in Fig. 1), aus dem das Montageelement 8 ausgestanzt wird. In dem Beispiel der Fig. 4 kann das Montageelement 8 dazu dienen, die Sitzschale auf einer horizontalen Querstrebe eines Sitzgestells zu fixieren.

Wie Fig. 4 beispielhaft entnommen werden kann, kann die Faserverbundstruktur 1 gekrümmt ausgebildet werden, wobei beidseitige Radien in demselben Pressvorgang herstellbar sind. Hierzu kann die zumindest eine Faserverbundmatte 2 bei dem Pressen beidseitig weg von einer Flächenausdehnung der zumindest einen Faserverbundmatte 2 gebogen werden. Das Formwerkzeug 4 kann ein entsprechend geformte Matrize 5 und/oder Patrize 6 aufweisen.

Bezugnehmend auf Fig. 6 wird ein Formwerkzeug 4 gezeigt, bei welchem zwei Faserverbundmatten 2 miteinander verpresst werden, nachdem beide zuvor wärmebehandelt wurden. Zuvor können die Faserverbundmatten 2 zudem bereits zugeschnitten worden sein und ggf. durch Vernadeln oder anderweitig aneinander befestigt worden sein.

Bei dem Verpressen werden ein oder mehrere zylinderförmige Hohlräume 15 zwischen den beiden Faserverbundmatten 2 ausgeformt, indem jeweils ein dornförmiger Formkern 16 zwischen die beiden Faserverbundmatten 2 eingelegt und nach dem Verpressen wieder herausgezogen wird. Ein solcher Formkern 7 kann beispielsweise aus Metall bestehen und in dem Formwerkzeug 4 eingespannt sein. In jeden Hohlraum 15 kann nach Aushärtung des Strukturelements 1 ein Montageelement 8 eingebracht und dort befestigt werden, z.B. durch Einpressen. Im Prinzip ist es in ähnlicher Weise ebenso möglich, Einlageteile zwischen die Faserverbundmatten 2 zu legen und mit diesen zu verpressen.

In Fig. 6 ist ein Schnitt durch das geschlossene Formwerkzeug 4 für das Pressen der Faserverbundstruktur 1 zu sehen. Dabei ist auf der linken Seite eine Anordnung für das Pressen von beidseitigen Radien (für die Fertigung eines gekrümmten Bauteils), rechts für das Pressen eines Hohlraums 15 für die Aufnahme des Stabelements 11 zu sehen.

Bei der gefertigten Faserverbundstruktur 1 kann es sich beispielsweise um einen Raumteiler handeln, wie er in Fig. 7 abgebildet ist. Beispielsweise kann es sich hierbei um eine Tischtrennwand handeln, die an einem Tisch montierbar ist.

Für die Befestigung der Faserverbundstruktur 1 ist in den Hohlraum 15 der Faserverbundstruktur 1 ein Montageelement 8 eingebracht, welches ein hohles Stabelement 17 und einen darin eingesteckten Adapter 18 umfasst. Der Adapter 18 kann zur Kopplung an ein Gegenelement eines Möbelstücks, z.B. einer Tischplatte und/oder eines Tischgestells, ausgebildet sein. Um eine gewisse Flexibilität für die Anbindung zu ermöglichen, können unterschiedlich ausgebildete Adapter 18 verwendet werden, die jeweils in das Stabelement 17 einsteckbar sein können und unterschiedliche Montagepositionen und/oder -konfigurationen bereitstellen können.

Im Ergebnis kann somit eine flächige, gekrümmte Faserverbundstruktur 1, insbesondere eine Möbelstrukturkomponente, aus einer oder mehreren Fasermatten 2 aus einem Vlies- und/oder Filzstoff als konturgeschnittener Formvlies mit beidseitigen Krümmungsradien gefertigt werden. Montageelemente 8 können in vorteilhafterweise ebenfalls aus der bzw. den Fasermatten 2 im Zuge desselben Fertigungsschritts gestanzt und anschließend stoffschlüssig mit der Faserverbundstruktur 1 verbunden werden. Ebenso können Hohlräume 15 mit in die Faserverbundstruktur 1 integriert werden, in welche dann Montageelemente 8 einsetzbar sind. Zudem können Versteifungsstrukturen und/oder Montagestrukturen direkt mit in die Faserstruktur der Möbelstrukturkomponente 1 hineingeformt werden. Einlageteile 9 aus Kunststoff können die Möbelstrukturkomponente 1 strukturell und funktional ergänzen und mit dieser verpresst werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Faserverbundstruktur
- 2: Faserverbundmatte
- 2a, 2b: Stanzbereiche
- 2c: Falzbereich
- 3: Falz
- 4: Formwerkzeug
- 5: Matrize
- 6: Patrize
- 7: Montagestruktur
- 8: Montageelement
- 9: Einlageteil
- 10: Befestigungshaken
- 11: Befestigungsfläche
- 12: Kontursteg
- 13: Falzsteg
- 14: Schweißpunkt
- 15: Hohlraum
- 16: Formkern
- 17: Stabelement
- 18: Adapter
- M: Verfahren
- M1-M3: Verfahrensschritte

## Patentansprüche

1. Verfahren (M) zur Herstellung einer einstückigen Faserverbundstruktur (1) aus zumindest einer Faserverbundmatte, das Verfahren (M) umfassend:
Erhitzen (M1) der zumindest einen Faserverbundmatte (2) auf eine Umformtemperatur, und
Pressen (M2) der erhitzten zumindest einen Faserverbundmatte (2) in einem einzelnen Arbeitshub eines Formwerkzeugs (4) zu einem flächigen Formteil, welches entsprechend einer Gestalt der Faserverbundstruktur (1) geformt ist,
wobei das Formteil in dem Arbeitshub aus der zumindest einen Faserverbundmatte (2) konturgestanzt und in Form gepresst wird, und
wobei die zumindest eine Faserverbundmatte (2) als ein einstückiges flexibles textiles Flächengebilde mit einem Kunststoffbestandteil ausgebildet ist, welcher eine Schmelztemperatur unterhalb der Umformtemperatur aufweist.

2. Verfahren (M) nach Anspruch 1,
**dadurch gekennzeichnet,**
**dass** zwei Faserverbundmatten (2) miteinander verpresst werden.

3. Verfahren (M) nach Anspruch 2,
**dadurch gekennzeichnet,**
**dass** die beiden Faserverbundmatten (2) vor dem Verpressen miteinander vernadelt werden.

4. Verfahren (M) nach Anspruch 2 oder 3,
**dadurch gekennzeichnet,**
**dass** ein Hohlraum (15) zwischen den beiden Faserverbundmatten (2) ausgeformt wird, indem ein Formkern (16) zwischen die beiden Faserverbundmatten (2) eingelegt wird und nach dem Verpressen wieder herausgezogen wird.

5. Verfahren (M) nach Anspruch 4,
**dadurch gekennzeichnet,**
**dass** ein Dorn als Formkern (16) zur Formung eines zylinderförmigen Hohlraums (15) verwendet wird.

6. Verfahren (M) nach einem der Ansprüche 1 bis 5, **dadurch gekennzeichnet,**
**dass** die zumindest eine Faserverbundmatte (2) einen Vliesstoff und/oder einen Filzstoff aufweist.

7. Verfahren (M) nach einem der Ansprüche 1 bis 6, **dadurch gekennzeichnet,**
**dass** die zumindest eine Faserverbundmatte (2) PET-basierte Fasern umfasst.

8. Verfahren (M) nach einem der Ansprüche 1 bis 7, **dadurch gekennzeichnet,**
**dass** die zumindest eine Faserverbundmatte (2) Bikompomonentenfasern umfasst, welche einen Polyesterkern aufweisen, der von einem Polymermantel mit einer Schmelztemperatur unterhalb der Umformtemperatur umgeben ist.

9. Verfahren (M) nach einem der Ansprüche 1 bis 8, **dadurch gekennzeichnet,**
**dass** das Formwerkzeug (4) eine Matrize (5) und eine Patrize (6) umfasst, welche jeweils eine komplementäre Wirkoberfläche aufweisen, die im Zusammenspiel bei dem Pressen die Kontur und die Form des Formteils vorgeben.

10. Verfahren (M) nach einem der Ansprüche 1 bis 9, **dadurch gekennzeichnet,**
**dass** die zumindest eine Faserverbundmatte (2) bei dem Pressen beidseitig weg von einer Flächenausdehnung der Faserverbundmatte (2) gebogen wird.

11. Verfahren (M) nach einem der Ansprüche 1 bis 10, **dadurch gekennzeichnet,**
**dass** ein Falz (3) in die zumindest eine Faserverbundmatte (2) eingepresst wird, welcher ein Filmscharnier zwischen zwei Bereichen des Formteils bildet.

12. Verfahren (M) nach einem der Ansprüche 1 bis 11, **dadurch gekennzeichnet,**
**dass** während des Arbeitshubs ein Einlageteil (9) mit der zumindest eine Faserverbundmatte (2) verpresst wird wobei das Einlageteil (9) vorzugsweise zwischen zwei Faserverbundmatten (2) eingelegt und mit diesen verpresst wird.

13. Verfahren (M) nach einem der Ansprüche 1 bis 12, **dadurch gekennzeichnet,**
**dass** während des Arbeitshubs in dem Formteil eine Versteifungsstruktur zur Versteifung der Faserverbundstruktur (1) und/oder eine Montagestruktur (7) zur Montage der Faserverbundstruktur (1) ausgeformt wird.

14. Verfahren (M) nach einem der Ansprüche 1 bis 13, **dadurch gekennzeichnet,**
**dass** das Verfahren (M) weiterhin Befestigen (M3) eines Montageelements (8) an das Formteil zur Montage der Faserverbundstruktur (1) umfasst, wobei das Montageelement (8) vorzugsweise an das Formteil gefügt wird.

15. Verfahren (M) nach Anspruch 14,
**dadurch gekennzeichnet,**
**dass** das Montageelement (8) in einem Hohlraum (8) zwischen zwei miteinander verpressten Faserverbundmatten (2) befestigt wird.18. Faserverbundstruktur (1), insbesondere Möbelstrukturkomponente, welche mit einem Verfahren (M) nach einem der Ansprüche 1 bis 17 hergestellt ist.
